Europäisches Patentamt

European Patent Office

Office européen des brevets

(19)

(11) Veröffentlichungsnummer: **0 255 569 B1**

# EUROPÄISCHE PATENTSCHRIFT

(12)

(45) Veröffentlichungstag der Patentschrift: **08.05.91**

(51) Int. Cl.5: **B29C 45/17**

(21) Anmeldenummer: **87104280.0**

(22) Anmeldetag: **24.03.87**

(54) **Einrichtung zum Umsetzen der Plastifiziereinheit einer Kunststoff-Spritzgiessmaschine.**

(30) Priorität: **06.08.86 DE 3626647**

(43) Veröffentlichungstag der Anmeldung:
**10.02.88 Patentblatt 88/06**

(45) Bekanntmachung des Hinweises auf die
Patenterteilung:
**08.05.91 Patentblatt 91/19**

(84) Benannte Vertragsstaaten:
**AT CH DE FR GB IT LI NL**

(56) Entgegenhaltungen:
**EP-A- 0 069 221**

**PATENT ABSTRACTS OF JAPAN, Band 8, Nr.
191 (M-322)[1628], 4. September 1984; & JP-
A-59 81 147 (NITSUSEI JIYUSHI KOGYO K.K.)
10-05-1984**

(73) Patentinhaber: **Hehl, Karl
Arthur-Hehl-Strasse 32
W-7298 Lossburg 1(DE)**

(72) Erfinder: **Hehl, Karl
Arthur-Hehl-Strasse 32
W-7298 Lossburg 1(DE)**

(74) Vertreter: **Mayer, Friedrich, Dr.
Patentanwälte Dr. Mayer & Frank Westliche
24
W-7530 Pforzheim(DE)**

## Beschreibung

Die Erfindung bezieht sich auf eine Umsetzeinrichtung entsprechend dem Oberbegriff des Patentanspruches 1.

Bei einer bekannten Umsetzeinrichtung dieser Art (EP-PS 0 069 221; Netstal News No. 20 February 1986 der Netstal-Machinery Ltd., 8752 Näfels/Switzerland) übergreift ein an der Decke des Stellraumes befestigtes Rahmengestell sowohl die Kunststoff-Spritzgießmaschinen als auch ein Magazin für die Plastifiziereinheiten. Auf dem Rahmengestell ist ein quer zur Spritzachse der Kunststoff-Spritzgießmaschinen bewegbarer Brückenkran mit parallel zur Spritzachse bewegbarer Laufkatze gelagert, welch letztere einen vertikal bewegbaren Tragarm mit Kupplungsorganen aufweist. Beim Wechseln der Plastifiziereinheit werden deren Verbindungen zur Spritzgießeinheit gelöst. Sodann wird die Plastifiziereinheit mit den Kupplungsorganen erfaßt, transportiert und im Magazin abgelegt. Danach erfaßt der Tragarm die einzuwechselnde Plastifiziereinheit und setzt diese nach Vollzug des umgekehrten Transportweges in der Kunststoff-Spritzgießmaschine ab. Beim Transport der Plastifiziereinheiten von den Kunststoff-Spritzgießmaschinen zum Magazin hängen diese am Tragarm der Laufkatze und überfahren dabei in einem 'Hochtransport' notwendigerweise auch vom Bedienungspersonal beanspruchte Begehungsbereiche an den Bedienungsseiten der Kunststoff-Spritzgießmaschinen.

Der Erfindung liegt die Aufgabe zugrunde, eine Umsetzeinrichtung der gattungsgemäßen Art derart weiterzubilden, daß sie im Rahmen der Serienfertigung oder einer Nachrüstung in die Kunststoff-Spritzgießmaschine selbst integrierbar und zwecks Erleichterung eines computergesteuerten Wechsels der Plastifiziereinheit ausschließlich für zwangsgeführte Umsetzbewegungen ausgelegt ist.

Diese Aufgabe wird durch die im Kennzeichen des Patentanspruches 1 genannten Merkmale gelöst.

Bei einer derartigen Ausbildung ergibt sich zudem der Vorteil, daß die Plastifiziereinheit auf niedrigem Niveau, nämlich etwa in Brusthöhe, auf dem Stellplatz absetzbar bzw. dort aufnehmbar ist und somit dieses niedrige Niveau als Transportniveau dienen kann. Ein Überfahren der Bedienungsseiten der Kunststoff-Spritzgießmaschinen und damit des Bedienungspersonals im Gefolge eines 'Hochtransportes' ist auf diese Weise vermieden. Zudem liegen die Voraussetzungen für eine raumsparende Gruppierung von Kunststoff-Spritzgießmaschinen um einen linearen Transportweg zum Depot vor, welcher Transportweg auf den vom Bedienungspersonal nicht in Anspruch genommenen Rückseiten der Kunststoff-Spritzgießmaschinen liegt. Weitere Ausgestaltungen der Erfindung ergeben sich aus den Merkmalen der abhängigen Ansprüche.

Nachstehend wird die Erfindung anhand der Zeichnung an einem Ausführungsbeispiel erläutert. Es zeigen:

Fig. 1 Einen Ausschnitt aus einer Kunststoff-Spritzgießmaschine im Bereich der Umsetzeinrichtung in Draufsicht mit einer Plastifiziereinheit in Absetzposition und einer weiteren Plastifiziereinheit auf einem Stellplatz des Wechseltisches,

Fig. 2 den Ausschnitt gemäß Fig. 1 von der Bedienungsseite her gesehen,

Fig. 2a den Ausschnitt gemäß Fig. 2 während des Quertransportes einer Plastifiziereinheit,

Fig. 3 einen Schnitt nach Linie III-III von Fig. 1,

Fig. 4 einen Ausschnitt aus Fig. 1 in vergrößerter Darstellung,

Fig. 5 den Ausschnitt gemäß Fig. 4 in Seitenansicht (der besseren Übersichtlichkeit wegen sind der Antriebsmotor für den Schlitten und seine zugehörigen Versorgungsorgane weggelassen),

Fig. 6 die Anordnung gemäß Fig. 5 in einem vertikalen Schnitt durch die Symmetrieebene von Schlitten und Schwenkhebel,

Fig. 7 ein Schema zur Verdeutlichung der beim Verschwenken der Plastifiziereinheit wirksam werdenden Kräfte und der Schwenkwege von Schwenkhebel und der antreibenden Kolben-Zylinder-Einheit,

Fig. 8 die an den Schwenkhebel angekuppelte Plastifiziereinheit im Querschnitt.

Die Erfindung betrifft eine Einrichtung (Umsetzeinrichtung) zum Umsetzen der von der Spritzgießeinheit E abkuppelbaren Plastifiziereinheit P an einer Kunststoff-Spritzgießmaschine. Ein solches Umsetzen stellt eine im Vollzug eines Wechsels der Plastifiziereinheit P erforderliche Operation dar. Bei einem solchen computergesteuerten Wechsel wird die Plastifiziereinheit P aus einer Einspritzposition, in welcher sie an der Spritzgießform 41 anliegt, axial in eine Absetzposition verschoben, in welcher die einen Plastifizierzylinder 12 und eine Förderschnecke 13 umfassende Plastifiziereinheit P von der Spritzgießform 41 thermisch getrennt ist, jedoch etwa koaxial zur Spritzachse s-s liegt. Sodann wird die Plastifiziereinheit P von der restlichen Spritzgießeinheit abgekuppelt und mit Hilfe der Umsetzeinrichtung aus ihrer Absetzposition auf einen außerhalb der Kunststoff-Spritzgießmaschine befindlichen Stellplatz A oder B abgesetzt, der auf einem Wechseltisch 15 oder auf einem Transportwagen sich befindet. Danach wird die Plastifiziereinheit vom Stellplatz zum Beispiel zu einem Depot transportiert, um dort aufbewahrt zu werden. Die einzuwechselnde, neue Plastifiziereinheit wird auf dem umgekehrten Wege unter Vollzug analoger Operationen in die Kunststoff-Spritzgießmaschine überführt.

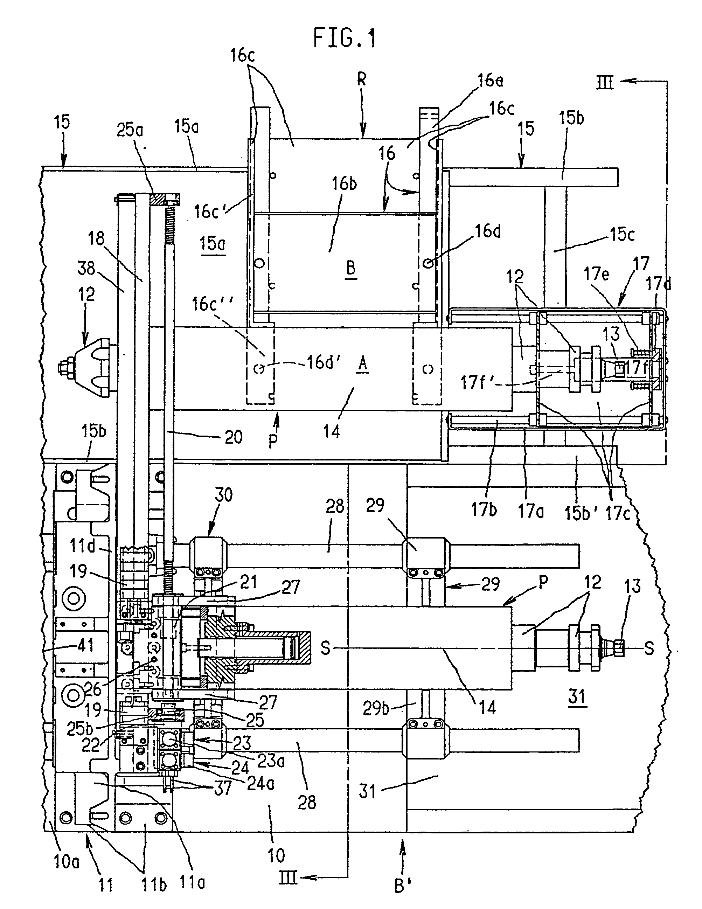

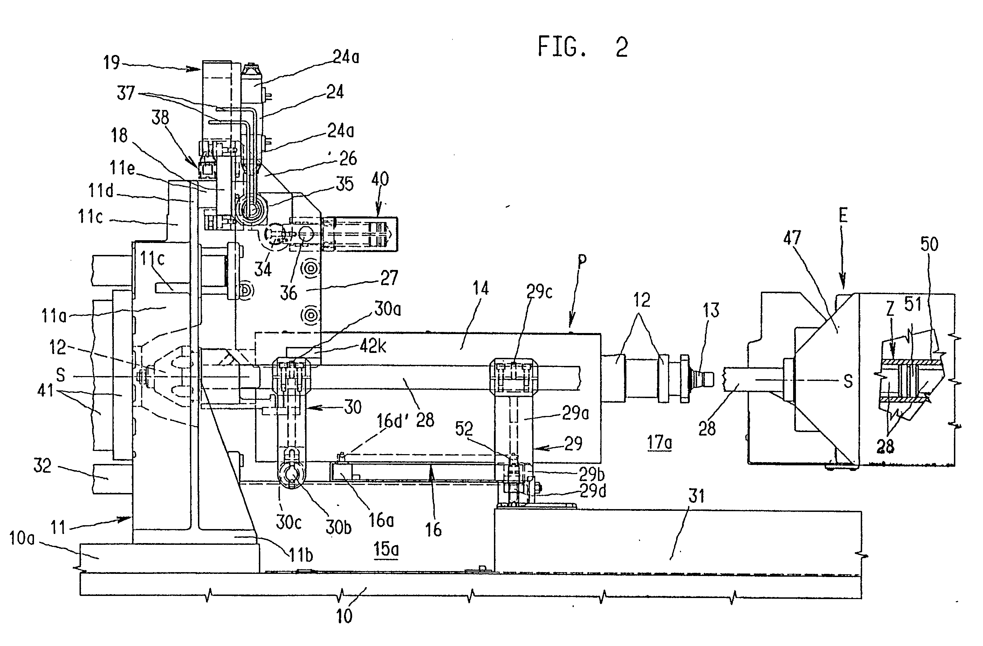

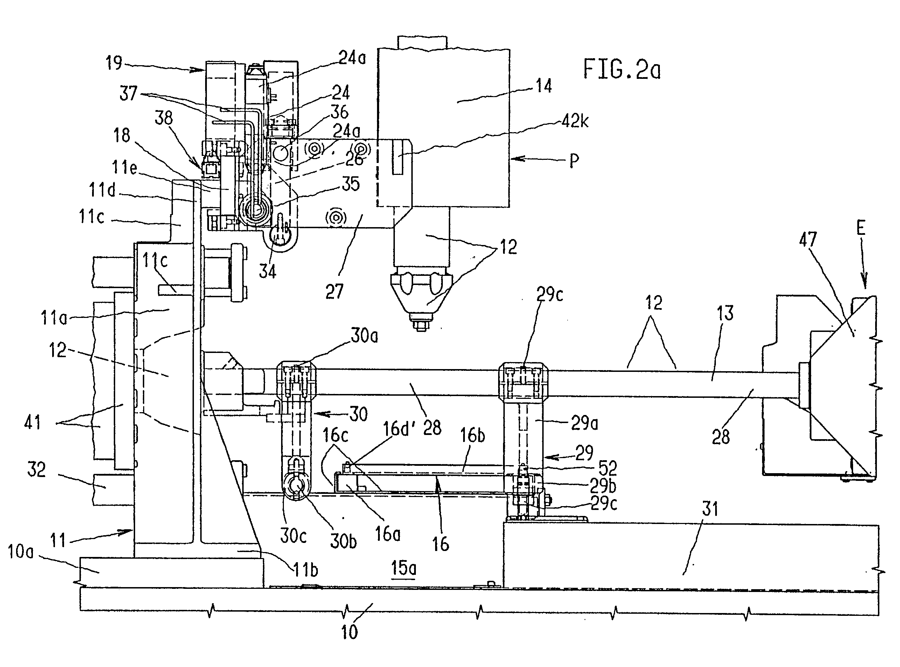

Die Umsetzeinrichtung ist in die Kunststoff-Spritzgießmaschine voll integriert. Im folgenden soll daher der Aufbau dieser Kunststoff-Spritzgießmaschine und der zeichnerisch dargestellten Ausführungsbeispiel vorgesehene, zugehörige Wechseltisch beschrieben werden: Die Kunststoff-Spritzgießmaschine umfaßt eine Formschließeinheit zum Festspannen der Spritzgießform 41 mit einem auf horizontalen Säulen 32 geführten und auf Führungsschienen 10a des Maschinenfußes 10 rollend abgestützten bewegbaren Formträger und mit einem stationären Formträger 11. Dieser ist über Zentrierfüße 11b auf den Führungsschienen 10a abgestützt. Er ist zur Versteifung mit einem den eigentlichen Formträgerkörper 11a auf drei Seiten überragenden Versteifungsschild 11d und weiteren Versteifungsrippen 11c versehen. Die horizontale Spritzgießeinheit E ist auf einem Podest 31 des Maschinenfußes 10 abgestützt und auf Säulen 28 verschiebbar gelagert, die in Höhe der Spritzachse s-s angeordnet und mit ihren vorderen Enden im stationären Formträger 11 verankert sind. Wie aus den Fign. 1,2,2a ersichtlich, sind die Säulen 28 über eine Stützeinrichtung 29 auf dem Podest 31 abgestützt. Weitere Abstützungen sind am rückwärtigen Ende der Holme 28 vorgesehen (zeichnerisch nicht dargestellt). Die Stützeinrichtung 29 umfaßt einen U-förmigen Stützbügel mit vertikalen U-Schenkeln 29a, deren freie Enden je die benachbarte Säule 28 mittels Schelle 29c umschließen und deren U-Steg 29b über höhenverstellbare Stützorgane 29d auf dem Podest 31 abgestützt ist. Wie insbesondere aus Fig.2 ersichtlich, ist die Spritzgießeinheit E mit ihrem Plastifizierzylinder (in der Figur bereits abgekuppelt) mit Hilfe eines Fahrzylinders Z auf den Säulen 28 axial verschiebbar. Dieser Fahrzylinder umfaßt Kolben 51, die auf den Säulen 28 fest aufsitzen und eigentliche Zylinder 50, welche mit dem Antriebsaggregat 47 der Spritzgießeinheit E verbunden sind, so daß sich bei gegensätzlicher Beaufschlagung der stationären Kolben 51 eine gegensätzliche Verschiebung der Spritzgießeinheit E oder des Trägerblockes 47 mit den zugehörigen Antriebsaggregaten auf den Säulen 28 ergibt.

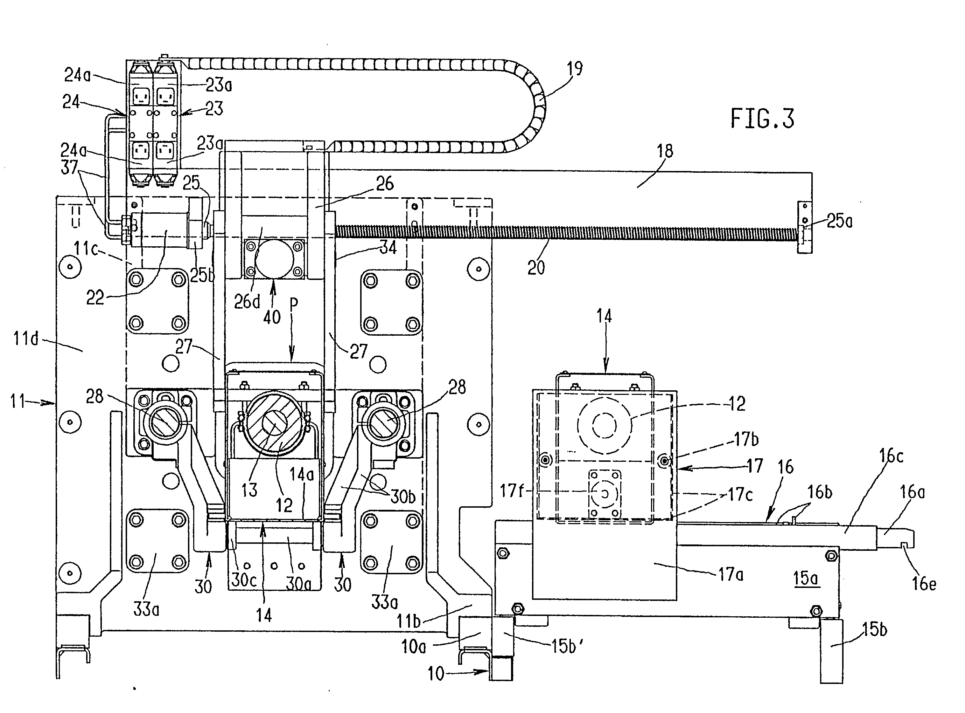

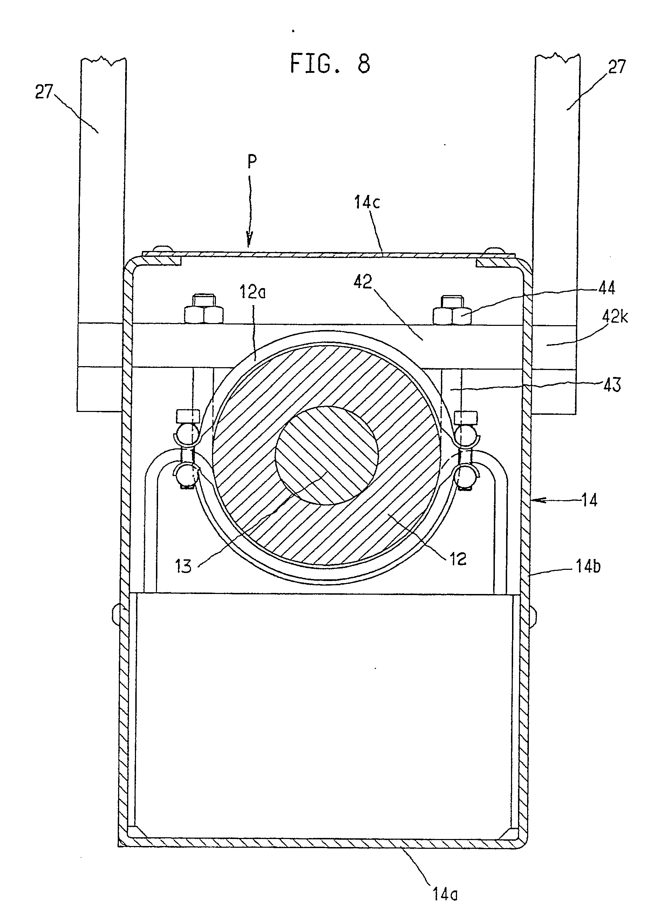

In Fig. 1 ist die Bedienungsseite der Kunststoff-Spritzgießmaschine mit einem "B" gekennzeichnet. Die Rückseite ist mit dem Bezugszeichen R versehen. Die Kunststoff-Spritzgießmaschine ist rückseitig mit einem bekannten Gießformwechseltisch 15 (ältere Patentanmeldung P 36 17 094.1-16 des Anmelders) versehen. Dieser weist zwei Stellplätze A,B auf, die einen unterschiedlichen Abstand zur Spritzachse s-s aufweisen (Fig. 1). Die Stellplätze, welche die auszuwechselnde Plastifiziereinheit P von oben aufnehmen können, sind auf einem aus Stahlblech gefertigten quaderförmigen Tragkörper 15a gebildet, wie insbesondere aus den Fign. 1,2,2a,3 ersichtlich. Der Tragkörper 15a ist auf Schienen 15b', 15b abgestützt, von welchen die eine 15b' an der Laufschiene 10a befestigt und die andere (15b) auf dem Boden abgestützt und über Querstreben 15c zur Stabilisierung mit der Schiene 15b', verbunden ist. Der Tragkörper 15a des Wechseltisches ist auf seinen Schienen 15b, 15b' parallel zur Spritzachse s-s mittels Kraftantrieb (Hydraulikzylinder oder Kugelrollspindel) verfahrbar und in einer Position gemäß Fig. 1 arretierbar. Auf dem Stellplatz B befindet sich eine Palette 16, wie aus den Fign. 1,2,2a,3 ersichtlich. Auf diese ist die Plastifiziereinheit P beim Wechsel von oben aufsetzbar bzw. nach oben abhebbar. Die Palette 16 ist durch zwei parallele Gleitstangen 16a gebildet, die mittels einer durch ein Blechprofil gebildeten Verbindungsplatte 16b miteinander verbunden sind und auf welcher Zentrierstifte 16d zur Zentrierung der auf die Palette aufsetzbaren Platifiziereinheit P angeordnet sind. Die Palette 16 ist in einer Palettenführung 16c quer zur Spritzachse s-s verschiebbar, die durch ein Blechprofil mit einem umgebogenen Rand 16c gebildet ist, welcher je die benachbarte Gleitstange 16a oben übergreift. Die Gleitstangen 16a erstrecken sich in den Stellplatz A hinein, wie aus Fig. 1 erkennbar. In dem diesbezüglichen Endabschnitt sind sie von verbreiterten, umgebogenen Rändern 16c" übergriffen, die mit Zentrierzapfen 16d' versehen sind. Auf diesen verbreiterten Rändern 16c" liegt die Plastifiziereinheit unter Zentrierung mittels der Zentrierzapfen 16d' auf dem Stellplatz A auf, wie aus Fig. 1 ersichtlich. Auf die bzw. von den Stellplätzen A,B ist die auszuwechselnde Plastifiziereinheit P mit Hilfe der (weiter unten beschriebenen) Umsetzeinrichtung wahlweise aufsetzbar bzw. von diesen abhebbar. Der Stellplatz A ist als sogenannter Adaptionsplatz ausgebildet, auf welchem die Plastifiziereinheit für den Einsatz in der Kunststoff-Spritzgießmaschine vorbereitet, insbesondere auf Betriebstemperatur gebracht werden kann. Auf dem Stellplatz B bildet die dort abgesetzte Plastifiziereinheit P mit der Palette 16 eine Transporteinheit für den Abtransport. Hierbei wird die Transporteinheit von dem im folgenden als 'Transferplatz' bezeichneten Stellplatz B auf einen Transportwagen transferiert. Dabei dient eine Quernut 16e (Fig.3) der Gleitstange 16a als Kupplungsorgan. Im folgenden wird, insbesondere anhand der Fig. 8, auf den Aufbau der Plastifiziereinheit als solcher eingegangen. Im Plastifizierzylinder 12 ist die Förderschnecke 13 axial verschieblich angeordnet. Der Plastifizierzylinder 12 ist mit einer Heizung 12a versehen und mittels horizontaler Trägerstege 42 und Spannbügel 43 mit vertikalen Wänden 14b einer U-förmigen Profilschiene 14 starr verbunden. Diese weist eine horizontale Stellwand 14a auf, welche über Biegekanten in die vertikalen Wände 14b übergehen. Die Wände 14b sind durch ein oberes horizontales Deckblech 14c zu einem Viereckrohr ergänzt, das den Plastifizierzylinder 12 mit Spiel umschließt. Die den Plastifizierzylinder U-förmig umschlingenden Spannbügel 43 durchsetzen mit ihren freien Enden je einen zugehörigen Trägersteg 42. Spannmuttern 44, die mit diesen Enden im Eingriff stehen, gewährleisten eine sichere Verspannung des Plastifizierzylinders 12 mit den Trägerstegen 42. Die Stellwand 14a dient als Stellfläche auf den Stellplätzen A,B, wobei je die Zentrierzapfen 16d bzw. 16' in korrespondierende Zentrierlöcher der Stellwand 14a eintauchen.

Die in Absetzposition befindliche Plastifiziereinheit P ist nach Abkupplung von ihrem Antriebsaggregat 47 über die horizontale Stellwand 14a abgestützt, was aus den Fign. 1-4 erkennbar ist. Zur Abstützung ist eine erste Stützeinrichtung 30 vor dem Schwerpunkt der Plastifiziereinheit sowie eine zweite Stützeinrichtung 29 hinter ihrem Schwerpunkt vorgesehen. Die erste Stützeinrichtung 30 umfaßt eine horizontale Lagerachse 30a mit Laufrollen 30c, auf welchen die Plastifiziereinheit P über die Stellwand 14a axial verschieblich aufliegt. Die Lagerachse 30a ist ihrerseits über Tragarme 30b an den Säulen 28 abgestützt. In der zweiten Stützeinrichtung 29 liegt die Plastifiziereinheit P über die Stellwand 14a axial unbeweglich auf dem horizontalen Steg der zugleich die Säulen 28 abstützenden Stützeinrichtung auf. Zur axialen Arretierung ist ein Arretierbolzen 52 hydraulisch in ein Arretierloch der Stellwand 14a einsteuerbar.

Mit der Umsetzeinrichtung kann die abgekuppelte, auf den Stützeinrichtungen 29,30 in Absetzposition in stabiler horizontaler Lage abgestützte Plastifiziereinheit P, also einer Lage gemäß Fig. 2 in eine Vertikallage gemäß Fig. 2a unter Umschwenken um 90° abgehoben, sodann auf einer horizontalen Transportschiene 18 quer zur Spritzachse s-s transportiert und danach wahlweise auf einem Stellplatz A oder B unter Schwenken in die Horizontale abgesetzt werden. Die hochkant angeordnete, im Querschnitt rechteckige Transportschiene 18 ist an Lageransätzen 11e des stationären Formträgers 11 befestigt. Sie befindet sich dabei in einem Abstand von der rückseitigen vertikalen Oberfläche des Formträgers 11, welcher der Höhe der Lageransätze 11e entspricht, die an der Oberkante des durch Versteifungsrippen 11c verstärkten Versteifungsschildes 11d angeformt sind.

Auf der Transportschiene 18 ist ein im Querschnitt U-förmiger Schlitten 26 motorisch verfahrbar. Dieser umschließt die Transportschiene mit geringem Spiel auf drei Seiten und ist sowohl auf deren einander gegenüberliegenden vertikalen Breitseiten, als auch auf deren einander gegenüberliegenden horizontalen Schmalseiten über Laufrollen 39a-39c abgestützt. Der im Grundaufbau einem hochkant gestellten "U" gleichende Körper des Schlittens 26 weist einen vertikalen Steg 26c auf, welcher mit der benachbarten vertikalen Breitseite der Transportschiene 18 korrespondiert; ferner zwei sich vom Steg 26c horizontal in Richtung der Formschließeinheit erstreckende Schenkel 26b, welche oben und unten die Schmalseiten der Transportschiene 18 überdecken. Beide U-Schenkel 26b sind mit Fortsätzen 26a,26a' versehen, welche die Schmalseiten der Transportschiene in Richtung Formschließeinheit überragen. An den Steg 26c ist rückseitig ein Lagerteil 26d zur Bildung der Lager für die Schwenkachsen der Umsetzeinrichtung angeformt. In den Fortsätzen 26a,26a' sind diejenigen Laufrollen 39a gelagert, welche die Transportschiene auf ihrer der Formschließeinheit zugewandten Seite abstützen. Die die gegenüberliegende Breitseite der Transportschiene abstützenden Laufrollen 39c sind in senkrechten Bohrungen des Steges 26c angeordnet. Die die Schmalseiten der Transportschiene abstützenden Laufrollen 39b,39b' sind in den Schenkeln 26b in horizontalen Bohrungen angeordnet, wobei die oberen Laufrollen 39b' gegenüber den unteren Laufrollen 39b zur vertikalen Symmetrieebene des Schlittens 26 hin versetzt sind.

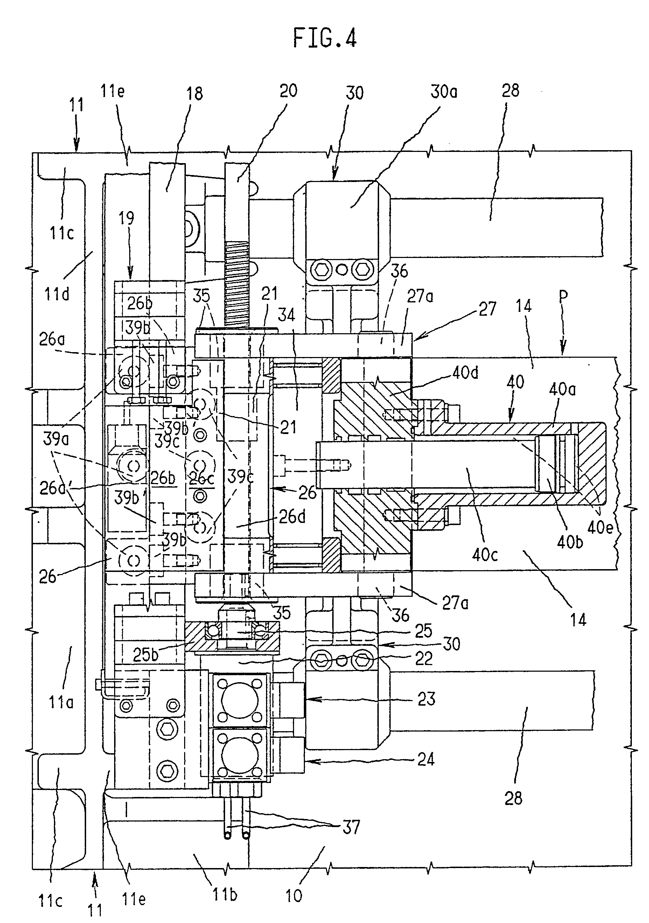

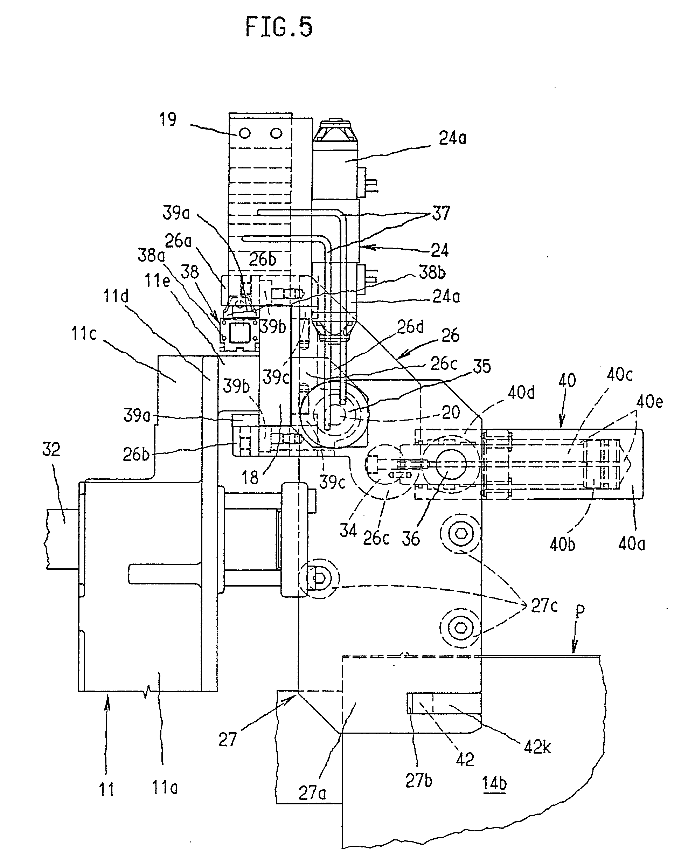

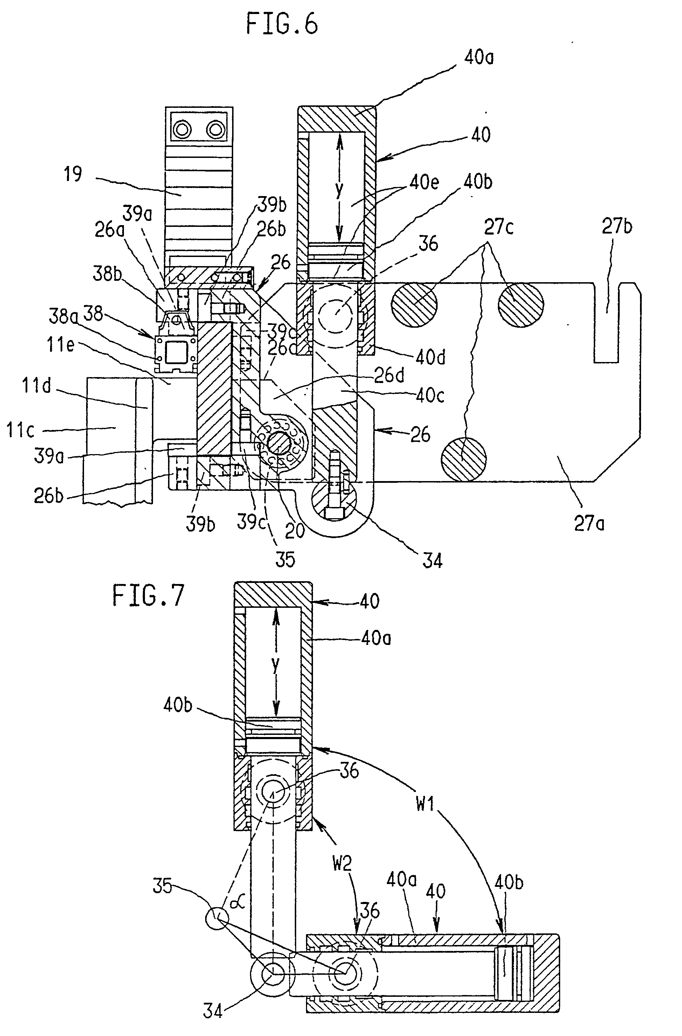

Ein um eine horizontale Schwenkachse mittels einer hydraulischen Kolben-Zylinder-Einheit 40 um 90° verschwenkbarer Schwenkhebel 27 ist mit der in Absetzposition oder auf einem Stellplatz A bzw. B befindlichen horizontalen Plastifiziereinheit kuppelbar. Der Schwenkhebel 27 ist mit einer Kolben-Zylinder-Einheit 40 mit der Plastifiziereinheit P als starre Schwenkeinheit um 90° in Transporthöhe verschwenkbar. Als Kupplungsorgane sind formschlüssig ineinander passende Steckprofile 27b;42k vorgesehen. Mit ihrer Hilfe kann zwischen der Plastifiziereinheit P und dem Schwenkhebel 27 im Gefolge einer zur Spritzachse s-s parallelen Bewegung der Plastifiziereinheit oder einer solchen Bewegung des Wechseltisches 15 eine starre Verbindung hergestellt bzw. gelöst werden. Der Schwenkhebel 27 umfaßt parallele Platten 27a und ist mit zwei Steckprofilen 27b versehen, die durch offene Schlitze an den Platten 27a gebildet sind. Bei einer unteren Endstellung (Fig. 5) des Schwenkhebels 27 verlaufen die Schlitze horizontal. Bei einer oberen Endstellung (Fig.6) vertikal. Die durch die Steckprofile 42k gebildeten zylinderseitigen Kupplungsorgane befinden sich in einem axialen Abstand von der Düse des Plastifizierzylinders 12, der etwa ein Drittel der Länge der Plastifiziereinheit P beträgt. Die freien, die Wände 14b der U-Profilschiene 14 durchsetzenden Enden bilden mehrkantige Steckprofile 42k, wie insbesondere aus Fig. 8 ersichtlich. Die gennanten Enden sind durch Vierkantblöcke verlängert, welche außen an den Wänden 14b angeschweißt sind. Die Schwenkachse des Schwenkhebels 27 ist durch Drehbuchsen 35 gebildet, die in Horizontalbohrungen des Lagerteils 26d des Schlittens 26 beidseits eingepaßt sind und auf welchen die Platten 27a des Schwenkhebels 27 verschwenkbar gelagert sind (Fig. 4-6). Der Schwenkhebel 27 ist mit Hilfe einer zwischen seinen Platten 27a angeordneten hydraulischen Kolben-Zylinder-Einheit 40 verschwenkbar, dessen Zylinder 40a am Schwenkhebel 27 über seinen Zylinderdeckel 40d befestigt ist. Dieser Zylinderdeckel ist mittels zylindrischer Zapfen 36 in den Platten 27a abgestützt. Die Hubrichtung der Kolben-Zylinder-Einheit 40 verläuft parallel zu den Schlitzen 27b. Die Kolbenstange 40c ist an einem im Lagerteil 26d um eine horizontale Achse verschwenkbaren Achsbolzen 34 widergelagert. Insbesondere aus dem Schema gemäß Fig. 7 wird in Verbindung mit den Figuren 5,6 deutlich, daß die aus Zylinder 40 und Schwenkhebel 27 bestehende starre Einheit um die Drehbuchsen 35 verschwenkt wird, so daß diese Einheit im Bereich der Lagerzapfen 36 einen Schwenkweg w2 beschreibt. Der Kolben 40b hingegen beschreibt um den Achsbolzen 34 einen Schwenkweg w1, der einen anderen Radius hat als der Schwenkweg w2. Dadurch ergibt sich bei einer Verschwenkung des Schwenkhebels 27 um 90° ein relativer, linearer Verschiebeweg y zwischen Kolben 40b und Zylinder 40. Bei Beaufschlagung des Kolbens 40b ergibt sich zudem eine Verschwenkungstendenz, weil der Zylinder 40a mit dem Schwenkhebel 27 und der Kolben 40b in Achsen gelagert sind, die sich im Abstand voneinander befinden, so daß sich ein entsprechendes Kraftdreieck 35,34,36 ergibt, aus dem ein Schwenkmoment resultiert. Zur Stabilisierung sind die beiden parallelen Platten 27a über Querstreben 27c miteinander verbunden.

Die zur Herstellung der starren Verbindung erforderliche Bewegung (Kupplungsbewegung) der Plastifiziereinheit P bzw. des Wechseltisches 15 und somit des Stellplatzes A bzw. B ist im zeichnerisch dargestellten Ausführungsbeispiel (im Falle der Plastifiziereinheit) durch einen Hub der die Spritzgießeinheit E auf die Spritzgießform aufsetzenden bzw. absetzenden Fahrzylinder Z bewirkbar (Fig. 2). Im Falle des Wechseltisches wird die Kupplungsbewegung durch einen hydraulischen Antrieb am Wechseltisch 15 bewirkt, der im Zusammenhang mit der Benutzung dieses Wechseltisches für den Wechsel der Spritzgießform der betreffenden Spritzgießmaschine ohnehin erforderlich ist. Im Zuge der Kupplungsbewegung werden die als Vierkant ausgebildeten Steckprofeil 42k der Plastifiziereinheit in die horizontale Schlitze 27b des Schwenkhebels 27 unter Herstellung des Formschlusses eingeschoben bzw. zur Lösung der Verbindung herausgezogen.

Der Schlitten 26 ist auf der Transportschiene 18 mit Hilfe einer axial festgelegten und motorisch rotierbaren Kugelrollspindel 20 und einer mit dieser Kugelrollspindel zusammenarbeitenden, am Schlitten 26 axial befestigten Kugelrollmutter 21 verfahrbar. Die Kugelrollspindel 20 liegt koaxial zu den Drehbuchsen 35 der die Schwenkachse für den Schwenkhebel 27 bildenden Drehbuchsen 35 und durchsetzt diese Drehbuchsen, wie insbesondere aus den Fign. 4-6 ersichtlich. An dem dem Wechseltisch 15 zugewandten Ende ist die Kugelrollspindel 20 in einem an der Transportschiene 18 befestigten Lagerstück 25a unter axialer Festlegung rotierbar gelagert. Am anderen Ende ist die Kugelrollspindel über ein an der Transportschiene 18 befestigtes Lagerstück 25b abgestützt, in welchem die Kupplung 25 zwischen Kugelrollspindel 20 und Hydraulikmotor 22 aufgenommen ist. Der Hydraulikmotor 22 wird über einen Verteilerblock 24 mit den zugehörigen Schaltventilen 24a mit dem hydraulischen Medium versorgt, welcher Verteilerblock 24 über die Leitungen 37 mit dem Hyraulikmotor 22 verbunden ist. Die Kolben-Zylinder-Einheit 40 wird mit Hilfe eines Verteilerblockes 23 und der zugehörigen Schaltventile 23a über eine flexible Energieschiene 19 versorgt, deren freies Ende am Schlitten 26 befestigt ist, wie insbesondere aus Fig. 3 erkennbar. Von der Anschlußstelle der Energieschiene führen Bohrungen zu den Zylinderkammern 40e (des Zylinders 40a). Bei Rotation der Kugelrollspindel 20 in der einen oder anderen Richtung wird der im Schlitten 26 befestigten, also nicht rotierbaren Kugelrollmutter, die über Kugeln mit der Kugelrollspindel 20 axial gekuppelt ist nach Maßgabe der Steigung der die Kugeln in der Kugelrollmutter 21 und der Kugelrollspindel 20 gleichermaßen aufnehmenden Kugelrillen eine axiale Bewegungskomponente erteilt, welche den Schlitten 26 antreibt. Ein als Wegmeßeinrichtung dienendes Linearpotentiometer 38 ermöglicht die wahlweise Programmierung von Quertransporten unterschiedlicher Länge. Auf diese Weise kann die Plastifiziereinheit nach Programm über die Transportschiene 18 verfahren und auf dem Stellplatz A oder B des Wechseltisches 15 oder (im Falle des Fehlens eines Wechseltisches 15) unmittelbar auf dem Stellplatz eines Transportwagens abgestellt werden. Ein langgestrecktes, durch ein Rohrprofil von etwa rechteckigem Querschnitt gebildetes Gehäuse 38a des Linearpotentiometers ist an der Transportschiene 18 befestigt (Fig. 6). Ein Schlitten 38b, in welchem die die Spannung abtastenden Schleifer angeordnet sind, ist über ein Gelenk mit dem Schlitten verbunden. Die vom Schleifer abgetastete Abtastfläche (Widerstandsbahn und Kollektorbahn) sind in einem bandförmigen Träger im Gehäuse 38a angeordnet. Wie insbesondere aus Fig. 1 erkennbar, ist der als Adaptionsplatz dienende Stellplatz A auf der von der Düse der Plastifiziereinheit P abgewandten Seite mit einem horizontalen Hydraulikzylinder 17f versehen, der rückseitig über einen Trägerbüge 17a am Wechseltisch 15 befestigt ist. Die Kolbenstange 17′ dieses Hydraulikzylinders greift am einen Schenkel eines U-förmigen Bügels 17c an, der auf Führungssäulen 17b horizontal verschiebbar gelagert ist. Die Führungssäulen 17b sind ihrerseits am Trägerbügel 17a befestigt. Mit dem anderen vertikalen U-Schenkel des U-Bügels 17c ist ein Ring 17d über Horizontalstifte 17e axial federnd verbunden. Die im Ring 17d verankerten Horizontalstifte 17e durchsetzen den genannten vertikalen U-Schenkel des U-Bügels 17c in Richtung zur Düse und sind je von einer Spiralfeder umschlossen, die einerseits an einem Kopf des betreffenden Horizontalstiftes 17e und andererseits am U-Schenkel abgestützt ist. Wird der U-Bügel 17c durch einen Hub des Hyraulikzylinders 17f nach links verschoben, so gelangt ein Innenkantprofil des Ringes 17d unter Formschluß über ein endständiges, korrespondierendes Kantprofil der Förderschnecke 13, so daß sich eine Drehsicherung ergibt. Wird der U-Bügel 17c noch etwas weiter nach links verschoben, so hebt sich sein bislang am Ring 17d anliegender vertikaler U-Schenkel vom Ring ab, wobei die an ihnen anliegenden Sprialfedern mehr oder weniger vorgespannt werden. Nach Maßgabe dieser Vorspannung wird die Förderschnecke 13 mittels der Einrichtung 17 über den Ring 17d axial belastet. Durch diese axiale Belastung wird erreicht, daß die Förderschnecke 13 bei Erwärmung des plastischen Materials in der Plastifiziereinheit P nicht nach rückwarts ausweichen kann, so daß ein rückseitiges Austreten von plastischem Material aus der Plastifiziereinheit vermieden wird.

Die in Absetzposition befindliche Plastifiziereinheit P wird unter Vollzug folgender Schritte auf den Stellplatz A oder B umgesetzt: Vor Abkupplung der Plastifiziereinheit P von ihrem Antriebsaggregat 47 wird die Spritzgießeinheit P mit Hilfe der beiden Fahrzylinder Z so weit nach rückwärts verfahren, daß die Platten 27a des in oberer Schwenkposition (Fig. 6) befindlichen Schwenkhebels 27 beidseits der vertikalen Wände 14b der Profilschiene 14 der Plastifiziereinheit P in eine untere Schwenkstellung (Fig. 5) verschwenkt werden können, ohne daß sie mit den Steckprofilen 42k der Plastifiziereinheit P kollidieren. Danach wird der Schwenkhebel aus der Position gemäß Fig. 6 in eine Position gemäß Fig. 5 verschwenkt. Sodann werden mit Hilfe der Fahrzylinder Z die Steckprofile 42k unter Herstellung des Formschlusses in die Schlitze 27b der Platten 27a durch einen entsprechend bemessenen Axialhub der Fahrzylinder Z eingeschoben. Sodann wird der Schwenkhebel 27 zusammen mit der Plastifiziereinheit aus einer Stellung gemäß den Fign. 2,5 in eine obere Stellung gemäß den Fign. 2a,6 verschwenkt. Sodann wird der Schwenkhebel 27 mit der hochkant gestellten Plastifiziereinheit P mit Hilfe des Schlittens 26 auf der Transportschiene 18 über den Stellplatz A oder B verfahren. Sodann wird der Plastifizierzylinder auf einem der Stellplätze nach unten verschwenkt und in horizontaler Position und unter Zentrierung an den Zentrierzapfen 16d bzw. 16d′ auf dem betreffenden Stellplatz in horizontaler Lage abgesetzt. Danach wird der Wechseltisch 15 mit der Plastifiziereinheit P verfahren und dadurch die Steckprofile 42k ausgezogen. Beim Umsetzen der Plastifiziereinheit von einem der Stellplätze A oder B in Absetzposition erfolgen die genannten Bewegungsschritte in umgekehrter Reihenfolge. In einem letzten Schritt wird dabei mit Hilfe der Fahrzylinder Z der Trägerblock 47 axial in Richtung Plastifiziereinheit so weit verschoben, daß die enständigen Kupplungsorgane an Förderschnecke 13 und Plastifizierzylinder 12 innerhalb des Trägerblockes mit diesem gekuppelt werden können. Nach Ankupplung werden die Steckprofile 42k durch einen entsprechend bemessenen Rückwärtshub der Fahrzylinder Z aus den Schlitzen 27b herausgezogen und der Schwenkhebel 27a nach oben verschwenkt. Nunmehr ist die Spritzgießeinheit frei für einen weiteren Spritzbetrieb.

Die Symmetrieachse des Hydraulikzylinders 17f (Fig. 1) zur federnden axialen Belastung und zur radialen Arretierung der Förderschnecke 13 fällt mit der Spritzachse s-s der auf diesem Stellplatz A abgestellten Plastifiziereinheit P zusammen. Die Spritzachsen s-s einer auf einem der Abstellplätze A oder B abgestellten Plastifiziereinheit P liegt in einer horizontalen Ebene mit der Spritzachse einer in Absetzposition befindlichen Plastifiziereinheit P.

## Ansprüche

1. Einrichtung (Umsetzeinrichtung) zum Umsetzen der von der Spritzgießeinheit abkuppelbaren Plastifiziereinheit an einer Kunststoff-Spritzgießmaschine aus ihrer zur Spritzachse etwa koaxialen Absetzposition auf einen an der Rückseite der Kunststoff-Spritzgießmaschine liegenden Stellplatz und umgekehrt, mit wenigstens einem hydraulischen Fahrzylinder zum axialen Verschieben der Spritzgießeinheit aus einer Einspritzposition für das Einspritzen des Kunststoffmaterials in die Spritzgießform in die eine thermische Trennung von der Spritzgießform bedingende Absetzposition, mit wenigstens einer stationären, quer zur Spritzachse verlaufenden Transportschiene, mit einen auf der Transportschiene führbaren Schlitten,

und mit einer am Schlitten angeordneten, die Plastifiziereinheit auf Transporthöhe anhebende Hebevorrichtung, dessen Kupplungsorgan (schlittenseitiges Kupplungsorgan) mit einem Kupplungsorgan (zylinderseitiges Kupplungsorgan) der Plastifiziereinheit korrespondiert, dadurch gekennzeichnet, daß das schlittenseitige Kupplungsorgan (Steckprofil 27b) am freien Ende eines mit seinem anderen Ende im Schlitten (26) gelagerten Schwenkhebels (27) angeordnet ist, der mittels Kraftantrieb gemeinsam mit der angekuppelten Plastifiziereinheit (P) als starre Schwenkeinheit um eine horizontale Schwenkachse in Transporthöhe verschwenkbar ist.

2.  Umsetzeinrichtung nach Patentanspruch 1, dadurch gekennzeichnet, daß als Kupplungsorgane formschlüssig ineinanderpassende Steckprofile (27b;42k) vorgesehen sind, mittels welcher zwischen der Plastifiziereinheit (P) und dem Schwenkhebel (27) im Gefolge einer zur Spritzachse (s-s) parallelen Bewegung der Plastifiziereinheit (P) oder des linear verfahrbaren Stellplatzes (A;B) eine starre Verbindung herstellbar und lösbar ist.

3.  Umsetzeinrichtung nach Patentanspruch 2, dadurch gekennzeichnet, daß der Plastifizierzylinder (12) der Plastifiziereinheit (P) mittels horizontaler Trägerstege (42) und Spannbügel (43) mit vertikalen Wänden (14b) einer den Plastifizierzylinder (12) umschließenden, U-förmigen Profilschiene (14) starr verbunden ist und daß die freien, die Wände (14b) durchsetzenden Enden eines der Trägerstege (42) Bestandteil der als Vierkant ausgebildeten Steckprofile (42k) sind.

4.  Umsetzeinrichtung nach einem Patentansprüche 1-3, dadurch gekennzeichnet, daß die Transportschiene (18) an der Oberkante des stationären Formträgers (11) befestigt und das zylinderseitige Kupplungsorgan (Steckprofil 42k) in einem axialen Abstand von der Düse des Plastifizierzylinders (12) angeordnet ist, der etwa ein Drittel der Länge der Plastifiziereinheit beträgt.

5.  Umsetzeinrichtung nach Patentanspruch 4, dadurch gekennzeichnet, daß der im Querschnitt U-förmige Schlitten (26) die im Querschnitt rechteckige, hochkant angeordnete Transportschiene (18) mit geringem Spiel auf drei Seiten umschließt und auf allen vier Seiten der Transportschiene (18) über Laufrollen (39a-39c) abgestützt ist und daß an der Rückseite des Schlittens ein Lagerteil (26d) zur Aufnahme von die Schwenkachse bildenden Drehbuchsen (35) angeformt ist.

6.  Umsetzeinrichtung nach einem der Patentansprüche 2-5, dadurch gekennzeichnet, daß der Schwenkhebel (27) mit Hilfe einer zwischen seinen Platten (27a) angeordneten hydraulischen Kolben-Zylinder-Einheit (40) verschwenkbar ist, dessen Zylinder (40a) am Schwenkhebel (27) parallel zu den als Schlitze ausgebildeten Steckprofilen (27b) befestigt ist, wobei die Kolbenstange (40c) an einem im Lagerteil (26d) des Schlittens (26) um eine horizontale Schwenkachse verschwenkbaren Achsbolzen (34) widergelagert und der Zylinder (40a) über seinen Zylinderdeckel (40d) am Schwenkhebel (27) befestigt ist, welcher Zylinderdeckel (40d) mittels zylindrischer Zapfen (36) in den Platten (27a) des Schwenkhebels (27) abgestützt ist.

7.  Umsetzeinrichtung nach einem der vorhergehenden Patentansprüche, dadurch gekennzeichnet, daß der Schlitten (26) mit Hilfe einer zur Schwenkachse (35) des Schwenkhebels (27) koaxialen, axial festgelegten und motorisch rotierbaren Kugelrollspindel (20) und einer am Schlitten (26) befestigten Kugelrollmutter (21) auf der Transportschiene (18) verfahrbar ist.

8.  Umsetzeinrichtung nach einem der Patentansprüche 3-7, dadurch gekennzeichnet, daß die von der Spritzgießeinheit abgekuppelte, in Absetzposition befindliche Plastifiziereinheit (P) über ihre Profilschiene (14) mittels einer ersten Stützeinrichtung (30) vor ihrem Schwerpunkt axial verschieblich und mittels einer zweiten Stützeinrichtung (29) hinter ihrem Schwerpunkt axial unbeweglich abgestützt ist.

9.  Umsetzeinrichtung nach einem der vorhergehenden Patentansprüche, dadurch gekennzeichnet, daß zwei Stellplätze (A;B) auf einem am Maschinenfuß der Spritzgießmaschine geführten Wechseltisch (15) hintereinander angeordnet sind, wobei der vordere Stellplatz (A) als Adaptionsplatz zur thermischen Adaption der Plastifiziereinheit an die Betriebsbedingungen und der hintere Stellplatz (B) als Transferplatz zur Überführung der Plastifiziereinheit (P) auf einen Transportwagen ausgebildet sind und die zur Spritzachse (s-s) parallele Bewegung der Plastifiziereinheit (P) zur Herstellung bzw. Lösung der Verbindung zwischen Plastifiziereinheit (P) und Schwenkhebel (28) bei in Absetzposition befindlicher Plastifiziereinheit (P) mit Hilfe des Fahrzylinders und bei auf einem Stellplatz (A;B) befindlicher Plastifiziereinheit (P) mit Hilfe eines den Wechseltisch (15) antreibenden Hydraulikzylinders bzw. einer Kugelrollspindel durchführbar ist.

10. Umsetzeinrichtung nach Patentanspruch 9, dadurch gekennzeichnet, daß der als Adaptionsplatz ausgebildete Stellplatz (A) mit einer Einrichtung zur federnden, axialen Abstützung und radialen Arretierung der Förderschnecke (13) versehen ist, die einen Hydraulikzylinder (17f) umfaßt, dessen Symmetrieachse mit der Spritzachse (s-s) der Plastifiziereinheit (P) zusammenfällt, welche Spritzachse mit der Spritzachse (s-s) einer in Absetzposition befindlichen Plastifiziereinheit (P) in einer horizontalen Ebene liegt.

## Claims

1. A device (transposing device) for transposing the plasticising unit, which may be uncoupled from the injection moulding assembly on a plastics injection moulding machine, from its disengaged position roughly coaxial with the injection axis on to an emplacement lying at the rear of the plastics injection moulding machine, and vice versa, with at least one hydraulic power cylinder for axially displacing the injection mould assembly from an injection position for injecting the synthetic material into the injection mould into the disengaged position involving thermal separation from the injection mould, with at least one stationary transport rail extending transversely to the injection axis, with a sled guidable on the transport rail, and with a lifting means located on the sled and raising the plasticising unit to the transport height, the coupling unit of said lifting means (coupling unit on the sled side) cooperating with a coupling unit (coupling unit on the cylinder side), characterised in that the coupling unit on the sled side (slot 27b) is located on the free end of a pivotal lever (27) whose other end is mounted in the sled (26), said pivotal lever (27), together with the coupled plasticising unit (P) being pivotable as a rigid pivoting unit around a horizontal pivotal axis into the transport height.

2. A transposing device according to Claim 1, characterised in that there are provided as coupling units pin and slot members (27b; 42k) which fit with a frictional lock into one another, by means of which a rigid connection may be established and released between the plasticising unit (P) and the pivotal lever (27) during a movement of the plasticising unit (P) or of the linearly-displaceable emplacement (A; B) parallel to the injection axis (s - s).

3. A transposing device according to Claim 2, characterised in that the plasticising cylinder (12) of the plasticising unit (P) is rigidly connected by means of horizontal carrier arms (42) and clamping yokes (43) to vertical walls (14b) of a U-shaped profiled strip (14) surrounding the plasticising cylinder (12), and that the free ends, passing through the walls (14b), of one of the carrier arms (42) are a component part of the pin-and-slot connections (42), which are rectangular in cross-section.

4. A transposing device according to one of Claims 1 to 3, characterised in that the transport rail (18) is secured to the upper edge of the stationary mould carrier (11), and the coupling unit on the cylinder side (slot 42k) is located at an axial spacing from the nozzle of the plasticising cylinder (12), this spacing coming to roughly one-third of the length of the plasticising unit.

5. A transposing device according to Claim 4, characterised in that the sled (26), which is U- shaped in cross-section, surrounds on three sides the rectangular-section, upended transport rail (18) with a small degree of play, and is supported on all four sides of the transport rail (18) on runner wheels (39a - 39c), and that there is formed on the rear side of the sled a bearing (26d) for receiving the rotary sleeves (35) forming the pivotal axis.

6. A transposing device according to one of Claims 2 to 5, characterised in that the pivotal lever (27) is pivotable with the aid of a hydraulic piston-cylinder unit (40) located between its plates (27a), the cylinder (40a) of said unit (40) being secured on the pivotal lever (27) parallel to the engagement members (27b) in the shape of slots, the piston rod (40c) being countersupported on a shaft pin 34) pivotal around a horizontal pivotal axis in the bearing portion (26d) of the sled (26), and the cylinder (40a) is attached by its cylinder cover (40d) to the pivotal lever (27), said cylinder cover (40d) being supported by cylindrical pins (36) in the plates (27a) of the pivotal lever (27).

7. A transposing device according to one of the foregoing Claims, characterised in that the sled (26) is displaceable on the transport rail (18) with the aid of a motor-driven circulating ball-type spindle (20), axially fixed coaxially with the pivotal axis (35) of the pivotal lever (27), and of a circulating ball-type nut (21) secured to the sled (26).

8. A transposing device according to one of Claims 3 to 7, characterised in that the plasticising unit (P), uncoupled from the injection mould assembly and located in the disengaged position, is supported via its profiled strip (14) by means of a first support device (30) which is axially displaceable forward of the centre of gravity of said plasticising unit (P), and by means of a second support device (29) axially immovably located behind its centre of gravity.

9. A transposing device according to one of the foregoing Claims, characterised in that two emplacements (A; B) are located one behind the other on a changing table (15) guided on the machine bed of the injection moulding machine, the forward emplacement (A) being designed as a conditioning station for thermal adaptation of the plasticising unit to operational conditions, and the rear emplacement (B) as a transfer station for transferring the plasticising unit (P) on to a transport carriage, and the movement of the plasticising unit (P), parallel to the injection axis (S - S), in order to establish or release the connection between the plasticising unit (P) and the pivotal lever (27) when the plasticising unit (p) is in the disengaged position, may be carried out with the aid of the power cylinder and, when the plasticising unit (P) is on an emplacement (A;B), with the aid of a hydraulic cylinder propelling the changing table (15), or of a circulating ball-type spindle.

10. A transposing device according to Claim 9, characterised in that the emplacement (A) designed as a conditioning station is provided with a device for resilient axial support and radial arrestment of the feed screw (13), said device comprising a hydraulic cylinder (17f) whose axis of symmetry coincides with the injection axis (s - s) of the plasticising unit (P), said injection axis lying in a horizontal plane with the injection axis (s - s) of a plasticising unit (P) located in the disengaged position.

**Revendications**

1. Dispositif (dispositif de transfert) pour transférer l'unité de ramollissement, laquelle peut être désaccouplée de l'unité de moulage par injection sur une machine de moulage de matière plastique par injection, depuis sa position de dépose où elle est à peu près coaxiale avec l'axe d'injection jusqu'à un emplacement situé à l'arrière de la machine de moulage de matière plastique par injection, et inversement,

comprenant au moins un cylindre hydraulique de déplacement pour déplacer axialement l'unité de moulage par injection depuis une position d'injection destinée à l'injection de la matière plastique dans le moule de moulage par injection jusqu'à la position de dépose qui entraîne une séparation thermique du moule de moulage par injection,

comprenant au moins un rail de transport fixe qui s'étend transversalement par rapport à l'axe d'injection, comprenant un chariot qui peut être guidé sur le rail de transport,

et comprenant un dispositif de levage qui est disposé sur le chariot, qui soulève l'unité de ramollissement jusqu'à la hauteur de transport et dont l'organe d'accouplement (organe d' accouplement situé du côté du chariot) correspond à un organe d'accouplement (organe d'accouplement situé du côté du cylindre) de l'unité de ramollissement,

caractérisé par le fait que l'organe d'accouplement situé du côté du chariot (profil d'enfoncement 27b) est disposé à l'extrémité libre d'un levier pivotant (27) qui est monté tournant sur le chariot (26) par son autre extrémité et qui, sous la forme d'une unité pivotante rigide formée avec l'unité de ramollissement accouplée (p), et au moyen d'un entraînement mécanique, peut être amené à pivoter autour d'un axe de pivotement horizontal jusqu'à la hauteur de transport.

2. Dispositif de transfert selon la revendication 1, caractérisé par le fait qu'il est prévu, comme organes d'accouplement, des profils d'enfoncement (27b ; 42k) qui s'ajustent les uns dans les autres avec conjugaison des formes et au moyen desquels une liaison rigide peut être réalisée et défaite entre l'unité de ramollissement (p) et le levier pivotant (27) à la suite d'un déplacement parallèle à l'axe d'injection (s-s) de l'unité de ramollissement (P) ou de l'emplacement linéairement déplaçable (A ; B).

3. Dispositif de transfert selon la revendication 2, caractérisé par le fait que le cylindre de ramollissement (12) de l'unité de ramollissement (P) est relié rigidement au moyen de poutres porteuses horizontales (42) et d'étriers de serrage (43) à des parois verticales (14b) d'un rail profilé (14) en forme de U qui entoure le cylindre de ramollissement (12), et par le fait que les extrémités libres de l'une des poutres porteuses (42), lesquelles traversent les parois (14b), sont un élément des profils d'enfoncement (42k) qui sont réalisés sous la forme d'un quatre-pans.

4. Dispositif de transfert selon l'une des revendications 1 à 3, caractérisé par le fait que le rail de transport (18) est fixé sur le bord supérieur du porte-moule fixe (11), et que l'organe d'accouplement situé du côté du cylindre (profil d'enfoncement 42k) est disposé à une distance axiale de la buse du cylindre de ramollissement (12) qui s'élève à peu près à un tiers de la longueur de l'unité de ramollissement.

5. Dispositif de transfert selon la revendication 4, caractérisé par le fait que le chariot (26) en forme de U en section transversale entoure sur trois côtés avec un faible jeu le rail de transport (18) qui est rectangulaire en section transversale et qui est disposé de chant, et qu'il est appuyé sur l'ensemble des quatre côtés du rail de transport (18) par l'intermédiaire de galets de roulement (39a-39c), et par le fait qu'est formée à l'arrière du chariot une pièce porte-paliers (26d) destinée à recevoir des douilles-pivots (35) qui forment l'axe de pivotement.

6. Dispositif de transfert selon l'une des revendications 2 à 5, caractérisé par le fait que le levier pivotant (27) peut pivoter à l'aide d'une unité hydraulique à piston et à cylindre (40) qui est disposée entre ses plaques (27a) et dont le cylindre (40a) est fixé au levier pivotant (27) parallèlement aux profils d'enfoncement (27b) qui sont réalisés sous la forme de fentes, cependant que la tige de piston (40c) est montée tournante en contre-appui sur un axe (34) qui peut pivoter autour d'un axe de pivotement horizontal dans la pièce porte-paliers (26d) du chariot (26), et que le cylindre (40a) est fixé au levier pivotant (27) par l'intermédiaire de son couvercle de cylindre (40d), ledit couvercle de cylindre (40d) étant supporté au moyen de goujons cylindriques (36) dans les plaques (27a) du levier pivotant (27).

7. Dispositif de transfert selon l'une des revendications précédentes, caractérisé par le fait que le chariot (26) peut être déplacé sur le rail de transport (18) à l'aide d'une broche filetée à billes (20) qui est coaxiale à l'axe de pivotement (35) du levier pivotant (27), qui est fixée axialement et qui peut être entraînée en rotation par un moteur, et à l'aide d'un écrou à billes (21) fixé au chariot (26).

8. Dispositif de transfert selon l'une des revendications 3 à 7, caractérisé par le fait que l'unité de ramollissement (P) qui est désaccouplée de l'unité de moulage par injection et qui se trouve en position de dépose est supportée à l'avant de son centre de gravité, et en pouvant se déplacer axialement, par l'intermédiaire de son rail profilé (14) et au moyen d'un premier dispositif d'appui (30), et à l'arrière de son centre de gravité, et sans pouvoir se déplacer axialement, au moyen d'un second dispositif d'appui (29).

9. Dispositif de transfert selon l'une des revendications précédentes, caractérisé par le fait que deux emplacements (A ; B) sont disposés l'un derrière l'autre sur une table de changement (15) qui est guidée sur le bâti de la machine de moulage par injection, l'emplacement avant (A) étant réalisé sous la forme d'un emplacement d'adaptation destiné à l'adaptation thermique de l'unité de ramollissement aux conditions de fonctionnement, et l'emplacement arrière (B) l'étant sous la forme d'une place de transfert destinée à faire passer l'unité de ramollissement (P) sur un véhicule de transport, cependant que le déplacement de l'unité de ramollissement (P) parallèlement à l'axe d'injection (s-s) en vue de réaliser ou, respectivement, de défaire la liaison entre l'unité de ramollissement (P) et le levier pivotant (27) peut être réalisé à l'aide du cylindre de déplacement lorsque l'unité de ramollissement (P) se trouve dans la position de dépose, et, lorsque l'unité de ramollissement (P) se trouve sur un emplacement (A ; B), à l'aide d'un cylindre hydraulique ou d'une broche filetée à billes, respectivement, qui entraîne la table de changement (15).

10. Dispositif de transfert selon la revendication 9, caractérisé par le fait que l'emplacement (A) qui est réalisé sous la forme d'un emplacement d'adaptation est muni d'un dispositif qui est destiné à l'appui élastique axial de la vis sans fin de déplacement (13) et à son blocage radial et qui comprend un cylindre hydraulique (17f) dont l'axe de symétrie coïncide avec l'axe d'injection (s-s) de l'unité de ramollissement (P), ledit axe d'injection étant situé dans le même plan horizontal que l'axe d'injection (s-s) d'une unité de ramollissement (P) qui se trouve en position de dépose.

# FIG.1

FIG. 2

FIG.2a

FIG.3

## FIG.4

# FIG.5

FIG.6

FIG.7

## FIG. 8